(19) **Europäisches Patentamt**
**European Patent Office**
**Office européen des brevets**

(11) Veröffentlichungsnummer : **0 039 043**
**B1**

(12) # EUROPÄISCHE PATENTSCHRIFT

(45) Veröffentlichungstag der Patentschrift :
26.09.84

(21) Anmeldenummer : **81103026.1**

(22) Anmeldetag : **22.04.81**

(51) Int. Cl.³ : **F 16 C 19/22**

(54) **Axial spielfreies Radialwälzlager.**

(30) Priorität : **25.04.80 DE 8011345 U**

(43) Veröffentlichungstag der Anmeldung :
**04.11.81 Patentblatt 81/44**

(45) Bekanntmachung des Hinweises auf die Patenterteilung : **26.09.84 Patentblatt 84/39**

(84) Benannte Vertragsstaaten :
**AT FR GB IT**

(56) Entgegenhaltungen :
**CH-A-   295 471**
**DE-B- 1 288 373**
**DE-C- 1 132 447**
**DE-U- 1 931 031**
**DE-U- 8 011 345**
**US-A- 2 098 683**
**US-A- 2 195 795**

(73) Patentinhaber : **SKF KUGELLAGERFABRIKEN GMBH**
**Ernst-Sachs-Strasse 2-8 Postfach 1440**
**D-8720 Schweinfurt (DE)**

(72) Erfinder : **Kispert, Klaus**
**Friedenstrasse 4**
**D-8720 Schweinfurt (DE)**
Erfinder : **Gössmann, Reimund**
**Gertrud-Herz-Strasse 16**
**D-8720 Schweinfurt (DE)**

(74) Vertreter : **Glanz, Werner, Dipl.-Ing.**
**Ernst-Sachs-Strasse 2-8**
**D-8720 Schweinfurt (DE)**

## Beschreibung

Die Erfindung betrifft ein axial spielfreies Radialwälzlager, insbesondere Rollenlager, bestehend aus Wälzkörpern, einem inneren und einem äußeren Laufring mit mindestens zwei, die Wälzkörper axial führenden Borden, von denen mindestens einer axial verschiebbar und axial federnd nachgebend angeordnet ist.

Ein Radialwälzlager dieser Art ist bereits durch die CH-A-295 471 bekannt. Bei dieser Ausführung stehen die axial verschiebbaren Borde über die Seitenflächen des Innenringes hinweg, wobei der außerhalb liegende, ringförmige Bordabschnitt im wesentlichen bis zur Bohrungsfläche des Innenringes reicht und an dessen Seitenfläche anliegt. An den Bordring schließt sich ein weiteres, ringförmiges Maschinenteil an, das eine Vielzahl am Umfang verteilte, axial wirkende Federelemente aufweist, die über einen weiteren Ring am verschiebbaren Bord anliegen. Diese Ausführung besteht aus vielen, aufwendig herzustellenden Einzelteilen und ergibt im zusammengebauten Zustand eine sich axial weit erstreckende Anordnung, die einen großen Bauraum benötigt. Darüber hinaus liegt der verschiebbare Bord an der Seitenfläche des Innenringes an, wobei ein axial spielfreies Radialwälzlager nur dann zu erzielen ist, wenn Innenring, Borde und Wälzkörperlänge maßlich aufeinander abgestimmt sind. Dies ist jedoch nur durch präzise Bearbeitung möglich.

Bei einem weiteren nach der US-A-2 195 795 bekannten Wälzlager muß der Innenring für die Aufnahme des verschiebbaren Bordes speziell bearbeitet werden. Das Federelement liegt axial außerhalb des Wälzlagers, wodurch viel Bauraum erforderlich ist und benötigt ein eigenes Maschinentiel zur Abstützung. Neben dem Nachteil einer sehr aufwendigen und teueren Konstruktion ist mit der bekannten Ausführung lediglich ein erhöhter Rollwiderstand und eine axiale Federung zu erzielen.

Weitere Radialwälzlager der eingangs genannten Art sind durch die US-A-2 098 683 bekannt. Die Lager sind mit axial federnd nachgebenden Blechringen versehen, die an den Stirnflächen der Wälzkörper anlaufen und sich in Nuten abstützen, die zu diesem Zweck in die Laufringe eingelassen sind. Ein Nachteil dieser bekannten Lösung besteht darin, daß bei Einwirken einer Axiallast nach Überwinden des Federweges eine ausreichend stabile, einem festen Bord gleichkommende Führungsfläche nicht mehr gegeben ist, wodurch sowohl der Blechring selbst als auch die Stirnflächen der Wälzkörper beschädigt werden können und das Lager schon frühzeitig ausfallen kann. Weiterhin ist nachteilig, daß die Laufringe zur Aufnahme der Blechringe durch Einarbeiten von Nuten speziell vorbereitet werden müssen. Dies erhöht nicht nur den Preis, sondern erfordert auch eine getrennte Lagerhaltung.

Eine andere federnde Anordnung eines Bordringes ist durch das DE-U-1 931 031 bekannt.

Obwohl bei dem bekannten Zylinderrollenlager der getrennte Bordring eine bessere Funktion gegenüber dem Gegenstand der US-A-2 098 683 hinsichtlich Berührungsfläche mit den Rollen ermöglicht, ist eine relativ aufwendige Ausführung des Außenringes nötig, um das Federelement abzustützen. Darüber hinaus ist mit dem bekannten Lager nur ein erhöhter Rollwiderstand zu erzielen ; eine axial spielfrei laufende Ausführung kann nach der Lehre des DE-U-1 931 031 nicht geschaffen werden.

Aufgabe der Erfindung ist es, ein axial spielfreies Radialwälzlager der eingangs genannten Art zu schaffen, das einen den Abmessungen eines Normallagers weitgehend entsprechenden Bauraum benötigt und einfach herzustellen ist.

Die Aufgabe wird dadurch gelöst, daß der federnd nachgebend angeordnete Bord mindestens ein sich gegen eine äußere, dem Laufring als axiale Anlage dienenden Schulter abstützendes Federelement aufweist und auf einer mit der Laufbahn auf gleicher Höhe liegenden Teilfläche eines der Laufringe angeordnet ist. Der Bordring ist aus massivem Material hergestellt und weist eine Anlauffläche für die Wälzkörper auf, die die gleichen mechanischen Eigenschaften hat, wie die des festen Bordes. Das Radialwälzlager liegt im eingebauten Zustand mit einer der Seitenflächen der Laufringe an einer Radialfläche, beispielsweise an der Schulter einer Welle, einer Gehäusefläche oder an anderen Maschinenteilen an. Zwischen dieser äußeren Anlagefläche und den Stirnflächen der Wälzkörper ist der Bordring axial verschiebbar angeordnet. Die Laufbahn des Laufringes erstreckt sich in axialer Fortsetzung auf gleicher Höhe bis zur Seitenfläche des Laufringes. Auf diesem zylindrischen Teilstück wird der Bordring verschiebbar geführt. Vorteilhafterweise ist es nicht notwendig, diese Fläche für die Aufnahme des Bordringes und des Federelementes besonders vorzubereiten oder zu bearbeiten. Sie kann mit der Laufbahn zusammen in einem Arbeitsgang bearbeitet werden. Diese Ausführung gleicht in vielen Fällen einem Lagerring mit nur einem festen Bord, so daß für das erfindungsgemäße spielfreie Radialwälzlager vorteilhafterweise auch Laufringe einer breiteren Normalausführung verwendet werden können. Das ermöglicht eine wirtschaftliche Fertigung und Lagerhaltung.

Der Betrag der axialen Verschiebung kann durch die Breite des Bordringes bzw. des Laufringes festgelegt werden. Zwischen der äußeren Anlagefläche des Laufringes und dem Bordring ist ein axial wirkendes Federelement angeordnet, das den Bordring gegen die Stirnflächen der Wälzkörper und diese gegen beispielsweise den zweiten festen Bord des Laufringes drückt. Auf diese Weise sind die Wälzkörper axial vorgespannt, wodurch ein Axialspiel und ein Kippen der Wälzkörper gegenüber dem betreffenden Laufring sicher unterbleibt.

Wird durch irgendwelche extreme axiale Belastungen die Federkraft überwunden, beispielsweise bei Stoß oder Schockbelastung, wird der massive Bordring gegen die Schulter für den betreffenden Laufring gedrückt und kann in dieser Position als normaler stabiler Bord vorteilhafterweise weitere größere Belastungen aufnehmen, ohne daß das Lager beschädigt wird. Die axiale Vorspannkraft kann durch die Wahl des Federelementes dem jeweiligen Radialwälzlager bzw. Anwendungsfall angepaßt werden. Dabei ist es von Vorteil, daß beim Einbau des Radialwälzlagers keinerlei Einstellarbeit hinsichtlich Verspannkraft nötig ist, weil diese durch die Abmessungen von Bordring und betreffendem Laufring, durch die Eigenschaften des Federelementes und somit vom Hersteller aus festliegen. Eine immer gleichbleibende und vom Einbau unabhängige Vorspannkraft ist dadurch sichergestellt. Für Anwendungsfälle, die beispielsweise eine andere Vorpannkraft erfordern, ist es jedoch möglich, diese durch Auswechseln des Bordringes bei gleichem Radialwälzlager zu vergrößern oder zu verkleinern. Weiterhin kann durch Einlegen von Distanzscheiben zwischen der Seitenfläche des betreffenden Laufringes und z. B. der Schulter der Welle die Vorspannkraft verkleinert bzw. durch Einlagen zwischen Bordring und Schulter vergrössert werden. Soll das Radialwälzlager in sich völlig spielfrei ausgeführt werden, ist es notwendig, mindestens je einen axial federnd nachgebenden Bordring an beiden Laufringen vorzusehen. Für spezielle Anwendungsfälle ist es jedoch auch möglich, alle Borde eines Radialwälzlagers federnd nachgebend anzuordnen.

Nach weiteren Merkmalen der Erfindung ist das Federelement als O-Ring, oder dgl. ausgeführt. Bei der vorgeschlagenen Lösung werden vorzugsweise handelsübliche preisgünstige Federelemente verwendet. Diese können zur Sicherung gegen radiales Verschieben oder Herausfallen beispielsweise in einer Ringnut oder dgl. des Bordringes eingelassen sein. Weiterhin können axial gerichtete in Sackbohrungen des Bordringes fixierte Schraubenfedern verwendet werden, die in entsprechender Anzahl am Umfang verteilt sind.

Die sehr einfache Herstellung des erfindungsgemäßen axial spielfreien Radialwälzlagers, ggf. die Verwendung von normalen Laufringen und die Verwendung handelsüblicher Federelemente ergeben insgesamt eine preisgünstige Lösung.

Die Erfindung wird im folgenden anhand der in den Zeichnungen dargestellten Beispiele beschrieben.

Es zeigt :

Figur 1 die Teilansicht eines axial spielfreien Zylinderrollenlagers im Längsschnitt mit federnd nachgebend angeordneten Bordringen an beiden Laufringen.

Figur 2 die Teilansicht eines zweireihigen Zylinderrollenlagers im Längsschnitt mit einem federnd nachgebend angeordneten Bordring.

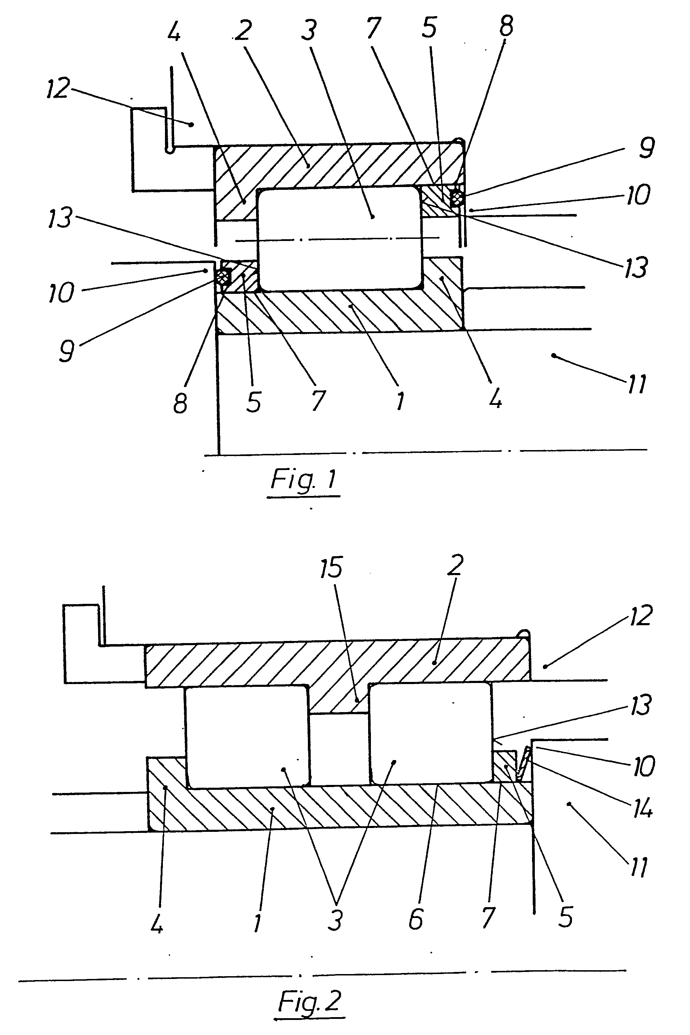

Das in Fig. 1 dargestellte Zylinderrollenlager besteht aus einem Innenring 1 einem Außenring 2 und Rollen 3. Der Innen und der Außenring 1, 2 weisen je einen festen Bord 4 und je einen axial federnd nachgebend angeordneten Bordring 5 auf. Die Bordringe 5 sind auf einer mit der Laufbahn auf gleicher Höhe liegenden Teilfläche 7 geführt. In die Bordringe 5 sind stirnseitig Ringnuten 8 eingearbeitet, in die elastische O-Ringe 9 eingelegt sind. Die O-Ringe 9 stützen sich an der Schulter 10 einer Welle 11 bzw. eines Gehäuses 12 ab, die auch die axiale Anlage für die Laufringe 1, 2 bildet. Die Abmessungen von Bordringen 5, O-Ringen 9 und Laufringen 1, 2 sind so gewählt, daß die Bordringe 5 durch die Federkraft der zusammengepreßten O-Ringe 9 axial gegen die Stirnflächen 13 der Rollen 3 gedrückt werden. Diese werden jedoch auf der anderen Seite durch die festen Borde 4 abgestützt, so daß sich eine axiale Vorspannung ergibt, durch die ein axiales Spiel der Rollen 3 verhindert wird. Bei extremen Axialbelastungen, die außerhalb des normalen Bereiches liegen, wird die Federkraft der O-Ringe 9 überwunden und die Bordringe 5 werden durch due Rollen 3 an die Schultern 10 für die Laufringe 1, 2 geschoben. In dieser Position haben sie die gleiche stabile Eigenschaft wie die festen Borde 4.

Das in Fig. 2 dargestellte zweireihige Zylinderrollenlager ist mit nur einem axial federnd nachgebend angeordneten Bordring 5 versehen, der in diesem Fall mit einer an einer Schulter 10 sich abstützenden Tellerfeder 14 gegen die Stirnflächen 13 der in der Zeichnung rechts angeordneten Reihe von Rollen 3 gedrückt wird. Diese bilden einen Kraftschluß über einen Mittelbord 15 des Außenringes 2, über die links angeordneten Rollen 3 zu einem festen Bord 4 des Innenringes 1. Auf diese Weise sind alle Rollen 3 des Lagers axial vorgespannt und laufen axial spielfrei. Die Vorgänge im Lager bei axialen Belastungen sind ähnlich wie bei Fig. 1 beschrieben.

Die in den Zeichnungen dargestellten und in der Beschreibung erläuterten Ausführungen sind nur Beispiele des erfindungsgemäßen Radialwälzlagers. Andere Ausführungsformen, insbesondere die konstruktive Gestaltung der axial federnd nachgebend angeordneten Bordringe, sind jederzeit möglich.

**Ansprüche**

1. Axial spielfreies Radialwälzlager, insbesondere Rollenlager, bestehend aus Wälzkörpern (3), einem inneren (1) und einem äußeren Laufring (2) mit mindestens zwei, die Wälzkörper (3) axial führenden Borden (4, 5), von denen mindestens einer (5) axial verschiebbar und axial federnd nachgebend angeordnet ist, dadurch gekennzeichnet, daß der federnd nachgebend angeordnete Bord (5) mindestens ein sich gegen eine äußere, dem Laufring (1, 2) als axiale Anlage dienenden Schulter (10) abstützendes Federelement (9, 14) aufweist und auf einer mit der Laufbahn (6) auf gleicher Höhe liegenden Teilfläche (7) eines der Laufringe (1 bzw. 2) angeordnet ist.

2. Axial spielfreies Radialwälzlager nach Anspruch 1, dadurch gekennzeichnet, daß das Federelement (9, 14) als O-Ring oder dgl. ausgeführt ist.

## Claims

1. Radial bearing with rolling contact being axially free from play, particularly roller bearing, composed of rolling elements (3), an inner ring (1) and an outer ring (2) having at least two flanges (4, 5) axially guiding the rolling elements (3), at least one of said flanges being axially displaceable and elastically flexible in axial direction, characterized in that the elastically flexible flange (5) is provided with at least one spring element (9, 14) resting against an outer shoulder (10) serving as axial abutment for the bearing ring (1, 2) and is arranged on part of a surface (7) on a level with the raceway (6) of one of the bearing rings (1 or 2).

2. Radial bearing with rolling contact being axially free from play as claimed in claim 1, characterized in that the spring element (9, 14) is executed in the form of an O-ring or similar element.

## Revendications

1. Palier à contact de roulement, axialement sans jeu, notamment roulement à rouleaux, se composant d'éléments roulants (3), d'une bague intérieure (1) et d'une bague extérieure (2) ayant au moins deux épaulements (4, 5) guidant les éléments roulants (3) axialement, épaulements dont au moins un (5) est disposé de manière axialement déplaçable et élastiquement flexible en direction axiale, caractérisé par le fait que l'épaulement élastiquement flexible (3) est muni d'au moins un élément de ressort (9, 14) s'appliquant contre une épaule extérieure (10) servant de surface de contact axiale pour la bague de roulement (1, 2) et que cet épaulement (5) est disposé sur une partie de surface (7) se trouvant au niveau du chemin de roulement (6) d'une des bagues de roulement (1 ou 2).

2. Palier à contact de roulement, axialement sans jeu suivant la revendication 1, caractérisé par le fait que l'élément de ressort (9, 14) est réalisé en forme de bague O ou élément similaire.

Fig. 1

Fig. 2